# EUROPEAN PATENT APPLICATION

(11) **EP 1 334 885 A2**
(43) Date of publication of application: **13.08.2003**
(21) Application number: 03001222.3
(22) Date of filing: 20.01.2003
(51) Int. Cl.: B60R 21/26

(54) **Inflator and closure-fixing structure of the same**

(30) Priority: 07.02.2002 JP 2002031049
(71) Applicant: TAKATA CORPORATION, Minato-ku, Tokyo 106-8510 (JP)
(72) Inventor: Doi, Makoto, Minato-ku, Tokyo 106-8510 (JP)
(74) Representative: Banzer, Hans-Jörg, Dipl.-Ing.

(57) **Abstract**

In order to provide a closure-fixing structure for an inflation,that allows using a filter having low strength and rigidity, which can also be applied to a casing and a closure made of various materials, and is capable of obtaining sufficient airtightness between the closure and the casing without mounting an O-ring on the outer periphery of the closure, a projecting portion (42) that projects from the inner peripheral surface of the casing (40) is formed in the position a predetermined distance apart from the end of the casing (40). The projecting portion (42) is formed as a projecting rib around the periphery of the casing (40).

The closure (50) is inserted into the casing (40) before the edge (44) is bent, and is retained by the projecting portion (42). The edge (44) is bent to the inside of the casing (40), that is, toward the center of the diameter by pressing to hold down the closure (50). The closure (50) is sandwiched and fixed by the projecting portion (42) and the edge (44). The closure (50) is subjected to a coining process whereby the closure (50) is intensely pressurized by a coining die (60) and a fixing die (62).

## Description

### [Technical Field of the Invention]

The present invention relates to an inflator for generating a gas used for an air bag apparatus and to a closure-fixing structure of the inflator.

### [Description of the Related Art]

Air bag apparatus mounted to automobiles and so on include an inflator (gas generator) for quickly expanding an air bag, as well known. Cylindrical inflators are used for, for example, passenger-side air bag apparatus. Sometimes these cylindrical inflators are also used for driver-side air bag apparatus, head-protecting air bag apparatus, side air bag apparatus, and pedestrian-protecting air bag apparatus.

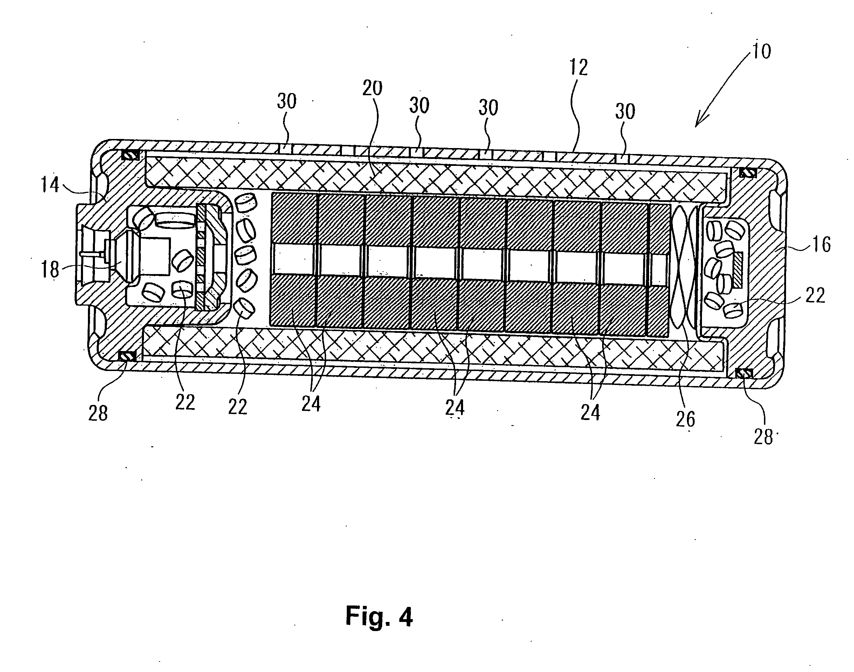

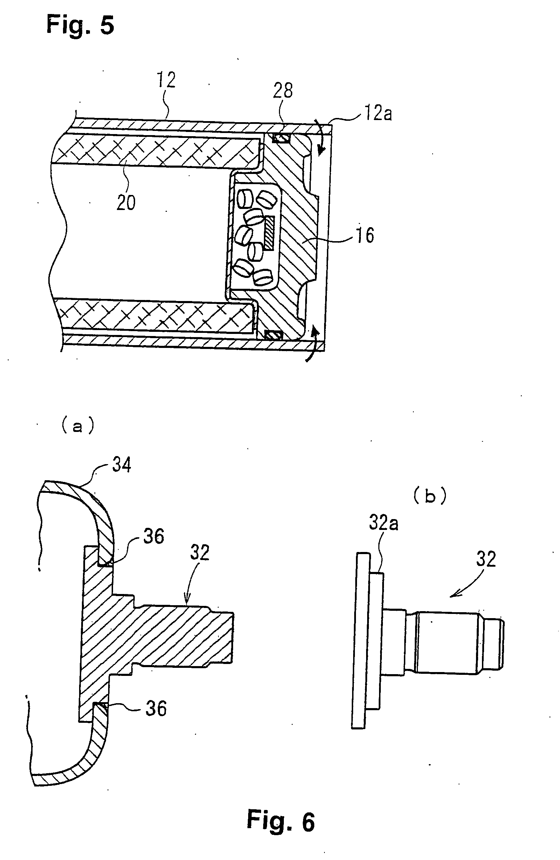

This cylindrical inflator includes the type in which the end of a cylindrical casing is closed by a closure (sealing plate) and the casing is filled with a gas generator. One conventional example of this type will be described with reference to Figs. 4 and 5.

This inflator 10 includes a cylindrical casing 12, closures (sealing plates) 14 and 16 for closing both ends of the casing 12, an initiator 18 fixed to one closure 14, a cylindrical filter 20 arranged along the inner periphery of the casing 12, a booster propellant 22, a wafer propellant 24, a spring 26 for pushing the wafer propellant 24, and an 0-ring 28 for sealing the outer peripheries of the closures 14 and 16.

When the initiator 18 is energized, the initiator 18 operates to jet a gas, by which the booster propellant 22 starts reaction to generate a gas. Subsequently, the wafer propellant 24 which has come into contact with the reaction gas of the booster propellant 22 reacts to generate a gas. Then, the gas jets out from a gas exhaust nozzle 30 of the casing 12 to expand an air bag.

In the aforesaid conventional inflator 10, when the closures 14 and 16. are fastened to the casing 12, after the closure 14 or 16 has been inserted into the cylindrical casing 12 before the end is bent, an edge 12a of the casing 12 is bent inwardly, as shown in Fig. 5. At that time, the inner plane inside the casing of the closure 14 or 16 is supported by the filter 20. In other words, a pushing force applied to the closure 14 or 16 so as to push it toward the inside of the casing when bending the edge 12a is opposed by the filter 20.

Fig. 6(a) is a sectional view showing a fixing structure of a closure 32 and a casing 34 according to another conventional example; and Fig. 6(b) is a side view of the closure 32.

In this conventional example, the edge of the casing 34 is shaped to decrease in diameter inwardly in advance. After a shoulder 32a at the outer periphery of the closure 32 has been brought into contact with the edge of the casing 34, the closure 32 and the casing 34 are welded together. Reference numeral 36 denotes its welding metal.

### [Problems to be Solved by the Invention]

As shown in Figs. 4 and 5, in the case of an arrangement in which the edge 12a of the casing 12 is bent to retain the closures 14 and 16, the closures 14 and 16 are supported by the filter 20; thus the filter 20 must have sufficient strength and rigidity. Accordingly, an object of the present invention is to provide a closure-fixing structure of an inflator that allows using a filter having low strength and rigidity.

As shown in Fig. 6, in the case of an arrangement in which the closure 32 is welded to the casing 34, both the casing 34 and the closure 32 must be made of a material that can be welded, thus having little room for selecting the material for the casing 34 and the closure 32. Accordingly, a second object of the present invention is to provide a closure-fixing structure of an inflator that can also be applied to a casing and a closure made of various materials.

Another object of the present invention is to provide a closure-fixing structure capable of obtaining sufficient airtightness between the closure and the casing without having an 0-ring around the outer periphery of the closure.

Furthermore, another object of the present invention is to provide an inflator that employs such a closure-fixing structure.

### [Means for Solving the Problems]

According to the present invention, these objects are achieved by a closure-fixing structure according to claim 1 or claim 4. The dependent claims define preferred or advantageous embodiments of the present invention.

The closure-fixing structure of the present invention, in which a plane-like closure is fixed to a cylindrical casing in such a way that the closure is inserted into the end of the casing and the edge of the casing is bent inwardly, is characterized in that: a projecting portion projecting from the inner surface of the casing is provided in the position closer to the center of the cylinder axis of the casing than the closure; and the closure is retained by the projecting portion.

With such a closure-fixing structure, since the closure is supported by the projecting portion of the casing when the edge of the casing is bent, load at the time of bending is not applied to a filter. Therefore, strength and rigidity required for the filter can be remarkably reduced. Also, this allows reducing the production cost of the inflator.

Preferably, the projecting portion is formed by the process of projecting the casing inwardly. Consequently, the projecting portion can remarkably easily be formed; thus, the production cost of the casing can be decreased.

According to the present invention, preferably, the outer peripheral surface of the closure is closely adhered to the inner peripheral surface of the casing by applying a coining process to the closure fixed to the casing.

An alternative to the closure-fixing structure of an inflator of the present invention as described above, in which a plane-like closure is fixed to a cylindrical casing in such a way that the closure is inserted into the end of the casing and the edge of the casing is bent inwardly, is characterized in that: the outer peripheral surface of the closure is closely adhered to the inner peripheral surface of the casing by applying a coining process to the closure fixed to the casing.

By applying the coining process, the outer peripheral surface of the closure is closely adhered to the inner peripheral surface of the casing, so that the inner peripheral surface of the casing and the outer peripheral surface of the closure can sufficiently be kept air-tight even without an O-ring.

According to the present invention, in an inflator having a cylindrical casing whose end is closed by a closure, a gas generator with which the casing is filled, and a reaction starting means for the gas generator, the closure is fixed to the casing with the aforesaid closure-fixing structure of the present invention. This inflator can reduce production cost, leading to reduction in the cost of an air bag apparatus.

### [Brief Description of the Drawings]

Fig. 1 is an explanatory diagram of a closure-fixing structure according to an embodiment, wherein Fig. (a) is a perspective view of the end of a casing, Figs. (b), (c), (d), and (e) are sectional views thereof, and Fig. (f) is a perspective view of the closure after coining.
Fig. 2 is a plan view showing other groove shapes of the closure after coining.
Fig. 3 is a perspective view showing other shapes of a projecting portion provided to the casing.
Fig. 4 is a sectional view of a conventional inflator.
Fig. 5 is a sectional view showing a manufacturing method of the inflator of Fig. 4.

Fig. (a) is a sectional view showing another conventional example; and Fig. (b) is a side view of the closure.

### [Description of the Embodiment]

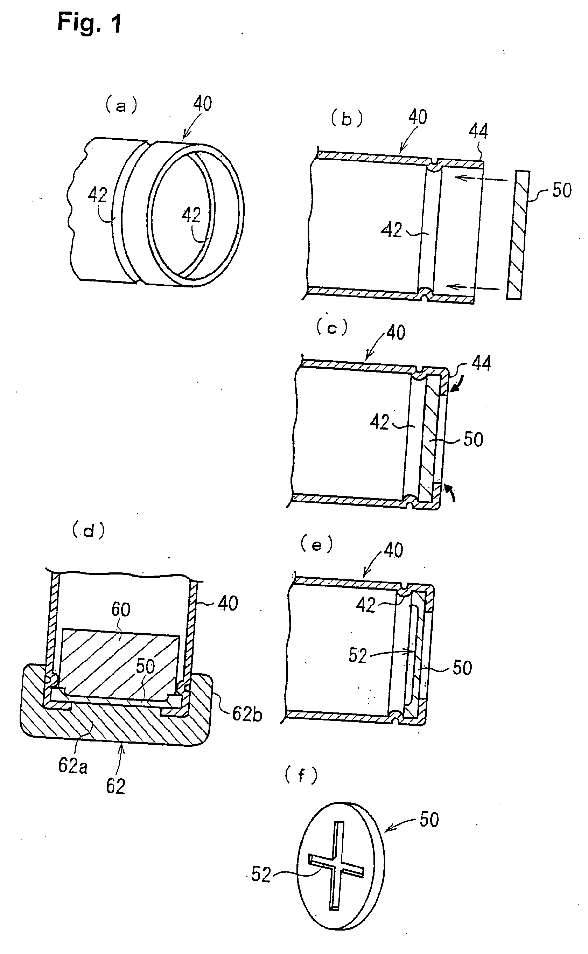

An embodiment will be described hereinafter with reference to the drawings. Fig. 1 is an explanatory diagram of a closure-fixing structure according to the embodiment.

In this embodiment, as shown in Figs. 1(b) to (e), a plane-like closure (sealing plate) 50 is inserted to one end of a cylindrical casing 40, and an edge 44 of the casing 40 is bent inwardly to fix the closure 50.

As clearly shown in Figs. 1(a) and (b), a projecting portion 42 that projects from the inner peripheral surface of the casing 40 is formed in the position a predetermined distance apart from the end of the casing 40. In this embodiment, the projecting portion 42 is formed as a projecting rib around the periphery of the casing 40. The projecting portion 42 is formed by applying a bead (drawing) process to the casing 40. The closure 50 is inserted into the casing 40 before the edge 44 is bent, and is retained by the projecting portion 42.

Subsequently, as shown in Fig. 1(c), the edge 44 is bent to the inside of the casing 40, that is, toward the center of the diameter by pressing to hold down the closure 50. The closure 50 is sandwiched and fixed by the projecting portion 42 and the edge 44.

Next, as shown in Fig. 1(d), the closure 50 is subjected to a coining process whereby the closure 50 is intensely pressurized by a coining die 60 and a fixing die 62. The fixing die 62 includes a base 62a which overlaps with the outer plane of the closure 50, and a ring 62b which surrounds the outer periphery at the one end of the casing 40. In this embodiment, a cross-shaped projecting rib (not shown) is provided at the end face of the coining die 60, wherein, in the coining process, the projecting rib is engaged in the plane inside the casing 40 (near the center of the shaft axis of the casing 40) of the closure 50 to form a cross-shaped groove 52 in the plane inside the closure 50, as shown in Fig. 1(f).

Since the casing 40 is restrained by the ring 62b of the fixing die 62 from the outer periphery, the closure 50 is plastically deformed so as to expand in the radial direction, so that the outer peripheral surface of the closure 50 is strongly pressed to the inner peripheral surface of the casing 40 to be brought in close contact therewith. Accordingly, the outer peripheral surface of the closure 50 and the inner peripheral surface of the casing 40 are hermetically sealed.

According to this embodiment, when the edge 44 of the casing 40 is bent, the closure 50 is supported by the projecting portion 42, so that load at the time of bending is not applied to a filter (not shown in Fig. 1). Therefore, less strength and rigidity are required for the filter. This allows employing a filter having only such original functions of a filter as to capture particulates (very fine particles) in a reaction gas and to decrease gas temperature. Also, since the closure 50 and the casing 40 are not welded together, the casing 40 and the closure 50 can be formed of a material other than a welding material, thus offering a wide choice of their materials.

In the embodiment of Fig. 1, the closure 50 is shaped like a disc, having simpler shape and structure than the closures 14, 16 and 32 of Figs. 4 to 6, and being low in production cost. In order to bend the edge 44 of the casing 40, a press having a simple structure can be used, thus allowing the reduction of cost for production facilities.

In the embodiment of Fig. 1, although the casing 40 includes the projecting portion 42, a casing according to the present invention may have no projecting portion 42, fixing the closure to the casing only by the coining process. In this case, the edge 44 at one end of the casing 40 is bent inwardly in advance, as in Fig. 1(c). Then, after the closure 50 has been inserted into the casing 40 from the other end of the casing 40, which is not shown, it is subjected to the coining process, as in Fig. 1(d), to adhere the outer peripheral surface of the closure 50 to the inner peripheral surface of the casing 40 closely and to fix the closure 50 to the casing 40.

The aforesaid embodiment is only an example of the present invention, and the present invention is not limited to the aforesaid embodiment. For example, the shape of the projecting rib provided on the end face of the coining die 60 is not limited to the cross shape, but may be various shapes such as an annular ring shape, a star shape, a spiral shape, a circular arch shape, and a straight-line shape.

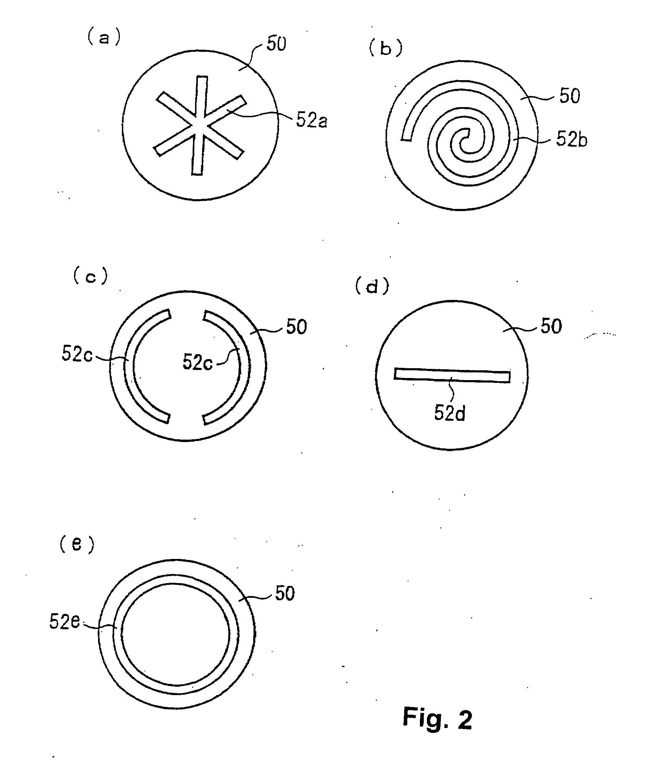

Figs. 2(a) to (e) show the shapes of the grooves of the closure 50, which are formed by the projecting ribs of the coining die with such shapes.

A groove 52a of Figs. 2(a) extends in six radiating direction. Also, it may be a groove that extends in three directions, five directions, or seven directions or more.

A groove 52b of Fig. 2(b) is shaped like a spiral. In Fig. 2(b), the spiral is substantially double; however, it may be a multiplex spiral.

A groove 52c of Fig. 2(c) is shaped like an almost semicircular arc. Two grooves 52c and 52c extend along the periphery of the closure 50. Also, it may be a circular-arc-shaped groove shorter than the groove 52c. For example, four grooves shaped like a substantially one-quarter circular arc may be formed around the periphery of the closure 50. Of course, it is obvious that various-length grooves may be formed, such as three grooves shaped like a substantially one-third circular arc.

A groove 52d of Fig. 2(d) is shaped like a straight line, extending in the diameter direction of the closure 50.

A groove 52e of Fig. 2(e) is shaped like an annular ring, extending along the periphery of the closure 50.

In the coining process, the groove may be provided only in the plane inside the casing 40 of the closure 50, but also in an outer plane. In this case, a projecting rib is provided on the surface of the base 62a, which overlaps with the outer plane of the closure 50 of the fixing die 62. At that time, it is preferable to place it with a gap so that the fixing die 52 and the coining die 60 do not overlap with each other in the axial direction.

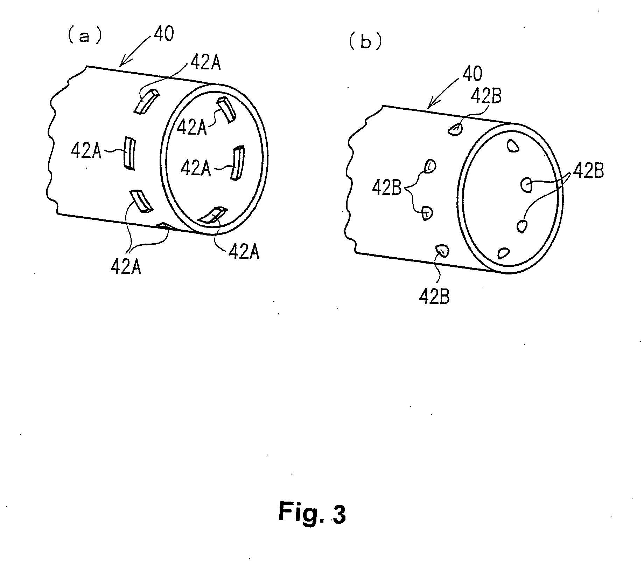

In the embodiment of Fig. 1, although the projecting portion 42 is provided along the whole circumference of the casing 40, a plurality of projecting portions 42A may be disconnectedly provided at fixed intervals in the circumferential direction, as in Fig. 3(a). In Fig. 3(a), the projecting portions 42A extend in a fixed length in the circumferential direction of the casing 40; however, dim-ple-shaped projecting portions 42B shaped like an almost hemispherical shell may be provided at fixed intervals in the circumferential direction of the casing, as in Fig. 3(b).

In this embodiment, the 0-ring may be mounted around the outer periphery of the closure.

### [Advantages of the Invention]

As described above, according to the present invention, the closure can be fixed to the end of the casing easily and firmly. Also, a wide choice of materials for the casing and the closure is offered.

## Claims

1. A closure-fixing structure of an inflator in which a plane-like closure (50) is fixed to a cylindrical casing (40) in such a way that the closure is inserted into the end of the casing (40) and the edge (44) of the casing (40) is bent inwardly, **characterized in that**:
a projecting portion (42; 42A; 42B) projecting from the inner surface of the casing (40) is provided in the position closer to the center of the cylinder axis of the casing (40) than the closure (50); and
the closure (50) is retained by the projecting portion (42; 42A; 42B).

2. The closure-fixing structure of an inflator according to Claim 1, **characterized in that** the projecting portion (42; 42A; 42B) is formed by applying a process of making the casing project inwardly.

3. The closure-fixing structure of an inflator according to Claim 1 or 2, **characterized in that** the outer peripheral surface of the closure (50) is closely adhered to the inner peripheral surface of the casing by applying a coining process to the closure (50) fixed to the casing (40).

4. A closure-fixing structure of an inflator in which a plane-like closure (50) is fixed to a cylindrical casing (40) in such a way that the closure (50) is inserted into the end of the casing (40) and the edge (44) of the casing (40) is bent inwardly, **characterized in that**:
the outer peripheral surface of the closure (50) is closely adhered to the inner peripheral surface of the casing (40) by applying a coining process to the closure (50) fixed to the casing (40).

5. An inflator having a cylindrical casing (40) whose end is closed by a closure (50), a gas generator with which the casing is filled, and a reaction starting means for the gas generator, **characterized in that** the closure (50) is fixed to the casing (40) with the closure-fixing structure of either one of Claims 1 to 4.
